# DEMANDE DE BREVET EUROPEEN

(11) **EP 4 411 737 A1**
(43) Date de publication de la demande: **07.08.2024**
(21) Numéro de dépôt: 24154330.5
(22) Date de dépôt: 29.01.2024
(51) Int. Cl.: G11C 16/22, G11C 7/24, G11C 13/00, G11C 16/34, G11C 29/40, G11C 29/52, G11C 29/44

(54) **PROCÉDÉ D'ÉCRITURE ET VÉRIFICATION DE L'ÉCRITURE D'UNE CLÉ DANS UNE MÉMOIRE NON-VOLATILE**

(30) Priorité: 03.02.2023 FR 2301053
(71) Demandeur: STMicroelectronics International N.V., 1228 Plan-les-Ouates, Geneva (CH)
(72) Inventeur: BENHAMMADI, Jawad, 38800 PONT DE CLAIX (FR)
(74) Mandataire: Thibon, Laurent

(57) **Abrégé**

La présente description concerne un procédé de vérification d'une écriture d'une clé dans une mémoire non-volatile (104) comprenant les étapes suivantes: stocker dans un registre (206) d'une interface (106) de ladite mémoire, un premier code de redondance cyclique de ladite clé, précalculé ; écrire la clé de sécurité dans une zone (218) de la mémoire non-volatile (104); copier la clé de sécurité écrite dans ladite zone (218) vers un deuxième registre (212) de ladite interface (106); calculer un deuxième code de redondance cyclique sur un message formé par la clé de sécurité copiée à laquelle est adossé le premier code de redondance cyclique ; si le deuxième code de redondance cyclique est équivalent à la valeur nulle, considérer l'écriture de la clé de sécurité dans ladite mémoire non volatile (104) comme valide.

## Description

### Domaine technique

La présente description concerne de façon générale les procédés d'écriture d'une clé dans une mémoire non-volatile et les circuits électroniques associés.

### Technique antérieure

Dans un circuit électronique, certains codes numériques constituant des clés, dites de sécurité, doivent être écrits et stockés dans une mémoire non-volatile et rendus inaccessibles depuis l'extérieur du circuit. En d'autres termes, ces clés sont susceptibles d'être manipulées par le circuit intégré dans lequel elles se trouvent mais ne doivent pas pouvoir être extraites de ce circuit. Cependant, lors de la fabrication, et plus particulièrement lors d'une phase de personnalisation du circuit, ces clés sont transférées dans le circuit. Il est nécessaire de vérifier que l'écriture a été effectuée correctement. Des procédés de vérification existent mais ils entraînent une diminution de la sécurité.

### Résumé de l'invention

Il existe un besoin d'un procédé d'écriture d'une clé dans une mémoire non-volatile permettant de vérifier que la clé a été correctement écrite tout en maintenant le niveau de sécurité.

Un mode de réalisation pallie tout ou partie des inconvénients des procédés d'écriture d'une clé dans une mémoire non-volatile connus.

Un mode de réalisation prévoit un procédé de vérification d'une écriture d'une clé dans une mémoire non-volatile comprenant les étapes suivantes :
- stocker dans un registre d'une interface de ladite mémoire, un premier code de redondance cyclique de ladite clé, précalculé ;
- écrire la clé de sécurité dans une zone de la mémoire non-volatile ;
- copier la clé de sécurité écrite dans ladite zone vers un deuxième registre de ladite interface ;
- calculer un deuxième code de redondance cyclique sur un message formé par la clé de sécurité copiée à laquelle est adossé le premier code de redondance cyclique ;
si le deuxième code de redondance cyclique est équivalent à la valeur nulle, considérer l'écriture de la clé de sécurité dans ladite mémoire non volatile comme valide.

Dans un mode de réalisation, si le deuxième code de redondance cyclique n'est pas équivalent à la valeur nulle, alors une des étapes n'est pas valide.

Un mode de réalisation prévoit un procédé d'écriture d'une clé dans une mémoire non volatile d'un circuit intégré comprenant au moins une interface de communication avec l'extérieur du circuit, comprenant les étapes de :
- transférer depuis l'extérieur du circuit : une clé dans un deuxième registre d'une interface de la mémoire non-volatile ; et un premier code de redondance cyclique précalculé dans un premier registre de ladite interface ;
- calculer un résultat d'un troisième code de redondance cyclique sur un message formé par la clé à laquelle est adossé le premier code de redondance cyclique précalculé ;
si le troisième code de redondance cyclique est équivalent à zéro, alors l'écriture de la clé de sécurité, dans le deuxième registre est considérée valide et est suivie des étapes du procédé ci-dessus.

Dans un mode de réalisation, si le troisième code de redondance cyclique n'est pas équivalent à la valeur nulle, alors une desdites étapes n'est pas valide.

Dans un mode de réalisation, le deuxième et/ou du troisième code de redondance cyclique équivalent à la valeur nulle est 0x00.

Dans un mode de réalisation, la clé est codée sur 128 bits.

Dans un mode de réalisation, les codes de redondance cyclique sont codés sur 8 ou 16 bits.

Dans un mode de réalisation, le deuxième registre est configuré pour être non lisible hormis pour un transfert de l'interface à la mémoire et inversement.

Dans un mode de réalisation, la mémoire non-volatile est une mémoire FLASH.

Un mode de réalisation prévoit un circuit électronique configuré pour mettre en oeuvre un tel procédé.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un exemple de circuit intégré du type auquel s'appliquent les modes de réalisation décrits ;
la figure 2 représente, de façon schématique, partielle et sous forme de blocs, un dispositif à mémoire non-volatile selon un mode de réalisation ;
la figure 3 représente, sous forme de blocs, des étapes d'un mode de mise en oeuvre d'un procédé de vérification de l'écriture d'une clé dans une mémoire non-volatile ; et
la figure 4 représente, sous forme de blocs, des étapes d'un autre mode de mise en oeuvre d'un procédé de vérification d'écriture d'une clé dans une mémoire non-volatile.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

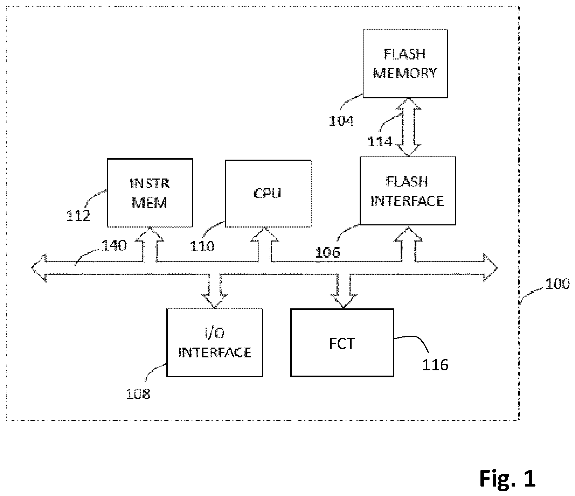

La figure 1 représente un exemple de circuit intégré 100 du type auquel s'appliquent les modes de réalisation décrits.

Le dispositif 100 comprend une mémoire non-volatile 104 (FLASH MEMORY), par exemple de type mémoire FLASH, capable de communiquer, via un bus de communication 114, avec une interface de mémoire non-volatile 106 (FLASH INTERFACE) configurée pour écrire ou lire des données dans et depuis la mémoire non-volatile 104.

Le dispositif 100 comprend en outre, par exemple, une unité de traitement 110 (CPU) comprenant un ou plusieurs processeurs sous contrôle d'instructions stockées dans une mémoire d'instructions 112 (INSTR MEM). La mémoire d'instruction 112 est par exemple de type à accès aléatoire (en anglais Random Access Memory, RAM). L'unité de traitement 110 et la mémoire 112 communiquent, par exemple, via un bus système 140 (de données, d'adresses et de commande). La mémoire FLASH 104 est reliée au bus système 140 par l'intermédiaire de l'interface de mémoire non-volatile 106 et par l'intermédiaire du bus 114. Le dispositif 100 comprend en outre une interface d'entrée/sortie 108 (I/O interface) reliée au bus système 140 pour communiquer avec l'extérieur.

Le dispositif 100 peut intégrer d'autres circuits mettant en oeuvre d'autres fonctions (par exemple, une ou plusieurs mémoires volatiles et/ou non-volatiles, d'autres unités de traitement), symbolisées par un bloc 116 (FCT) en figure 1.

Les modes de réalisation décrits concernent l'écriture d'une clé dans la mémoire non-volatile 104 ou une zone de celle-ci, via un transfert de cette clé depuis l'interface 106 dans laquelle cette clé est stockée dans une mémoire ou registre à écriture seulement (non lisible depuis le bus 140) . Lorsque la clé est transférée de l'interface 106 vers la mémoire 104, la zone correspondant de la mémoire 104 ne peut plus être lue depuis l'extérieur (via le bus 140).

Une difficulté réside dans le besoin de s'assurer que la clé puisse être transférée, sans erreur, dans la mémoire 104 sans que cette clé n'ait besoin d'y être lue pour vérification par une interface accessible depuis l'extérieur du circuit.

En effet, une solution serait de conserver « ouverte », c'est-à-dire opérationnelle, une interface de test qui équipe généralement le circuit afin d'accéder à la mémoire 104 après écriture de la clé et vérifier sa cohérence avec la clé d'origine. Toutefois, on souhaite à l'inverse désactiver l'interface de test avant tout stockage de clé dans le circuit afin d'éviter une faille dans la sécurité des clés.

Typiquement, pour vérifier que l'écriture d'une donnée s'est effectuée sans erreur, sans avoir à vérifier bit à bit, on utilise une procédure de hachage (hash en anglais) fournissant un code de taille réduite de cette donnée. Un des codes de vérification les plus courants est le code de redondance cyclique ou CRC. Le calcul de CRC est généralement effectué de façon matérielle par une machine d'états finis et est ajouté à la fin de la donnée qu'il signe, et stocké avec celle-ci. Un CRC se caractérise par son nombre de bits qui conditionne sa robustesse en termes de détection d'erreurs.

Un exemple d'application des modes de réalisation décrits concerne l'écriture d'une clé autorisant le déverrouillage (ouverture pour un accès depuis l'extérieur) de la mémoire, par exemple à des fins de déboqage. Dans un tel cas, la clé doit pourvoir être stockée par le fabricant dans la mémoire 104 sans qu'elle puisse être ensuite sortie à l'extérieur du circuit.

Selon les modes de réalisation décrits, on prévoit d'effectuer la vérification d'un CRC lié à une clé par un programme de l'interface 106 en stockant ce CRC de façon volatile dans l'interface 106. Cette vérification est effectuée au moins lors de son transfert de l'interface 106 vers une zone dédiée de la mémoire 104, et de préférence à la fois lors du stockage de cette clé dans cette interface 106 et lors de son transfert de l'interface 106 vers une zone dédiée de la mémoire 104. Le CRC de la clé n'est donc pas stocké dans le circuit mais est fourni par le fabricant ou l'opérateur de personnalisation au circuit.

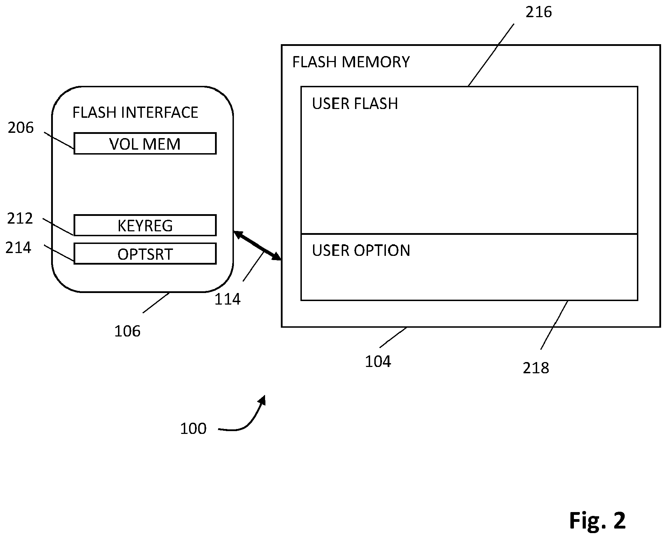

La figure 2 représente, de façon schématique, partielle et sous forme de blocs, un dispositif à mémoire non-volatile 100 selon un mode de réalisation.

Plus particulièrement, l'exemple représenté illustre un mode de réalisation de l'interface de mémoire non-volatile 106 et de la mémoire non-volatile 104.

L'interface de mémoire non-volatile 106 comprend des registres de mémorisation volatile 206 (VOL MEM), parmi lesquels un registre dédié au stockage de clé(s) 212 (KEYREG), et une zone 214 qui, après qu'une instruction (OPTRST) ait été exécutée, reçoit la recopie par une machine d'état des valeurs d'options utilisateurs.

Selon un exemple, le registre 212 est configuré pour être inscriptible et non lisible sauf pour un transfert vers et depuis la mémoire 104. En d'autres termes, le registre 212 n'est pas lisible via le bus 140, par exemple par le microcontrôleur 110.

Dans l'exemple représenté, la mémoire non-volatile 104, par exemple de type flash, comprend une première région 216 (USER FLASH) et une deuxième région 218 (USER OPTION). La deuxième région 218 correspond par exemple à une section d'octets d'options d'utilisateur.

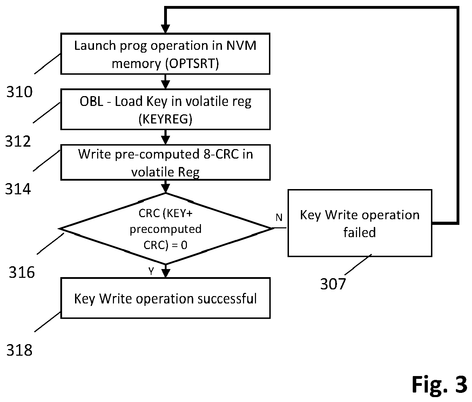

La figure 3 représente, sous forme de blocs, des étapes d'un mode de mise en oeuvre d'un procédé de vérification de l'écriture d'une clé dans la mémoire non-volatile 104 selon un mode de réalisation.

L'écriture est illustrée par une étape 310 (Launch prog operation in NVM memory (OPTSRT)) au cours de laquelle la clé est transférée de l'interface 106, par exemple depuis le registre 212, vers la zone dédiée 218 de la mémoire flash 104, par l'exécution d'instructions d'un programme contenu dans l'interface 106.

Dans une étape 312 (OBL - Load Key in volatile reg (KEYREG)), la clé est lue dans la zone 218 et transférée, via le bus 114, dans le registre dédié 212 de l'interface 106. Ce transfert peut correspondre à l'exécution d'instructions de chargement des options utilisateur stockées dans la zone 218 (OBL, Option Byte Loading en anglais). Les octets d'option utilisateur sont utilisés pour préconfigurer le dispositif à mémoire non-volatile 100 avant le démarrage des unités de calculs par exemple. Ces octets sont par exemple chargés automatiquement après une réinitialisation ou après une requête venant du programme de l'interface 106.

Dans une étape 314 (Write pre-computed 8b-CRC in volatile Reg), un résultat précalculé du CRC de la clé est stocké dans un des registres 206. Le CRC précalculé est codé, par exemple, sur 8 bits ou sur 16 bits.

Dans une étape 316 (CRC (KEY+ precomputed CRC) = 0), un deuxième CRC est calculé sur un message formé par la clé à laquelle est adossé le code précalculé. Le deuxième code est calculé par la même machine d'états que le code précalculé. Ainsi, s'il présente une valeur nulle (0, ou 0x0 pour un octet), cela signifie que la clé écrite dans la mémoire 104 ne comporte pas d'erreur. Dans ce cas (branche Y de sortie du bloc 316), la clé est considérée comme valide (bloc 318 - Key Write operation successful). Dans le cas contraire (branche N du bloc 316), l'écriture de la clé est considérée comme invalide (bloc 307 - Key Write operation failed). L'étape 307 est, par exemple, suivie d'un retour à l'étape 310 pour une réécriture de la clé dans le mémoire 104.

Le procédé de la figure 3 permet, de par le calcul de CRC effectué sur un message formé par la clé à laquelle est adossé le CRC de cette clé, de contrôler que l'écriture de la clé dans la mémoire non-volatile est valide, sans avoir à réutiliser la clé elle-même, et en maintenant un niveau de sécurité identique au niveau de sécurité de la clé de sécurité elle-même. Par exemple si la clé est codée sur 128 bits, le niveau de sécurité de la clé est maintenu à 128 bits et n'est pas affecté par le nombre de bits du CRC.

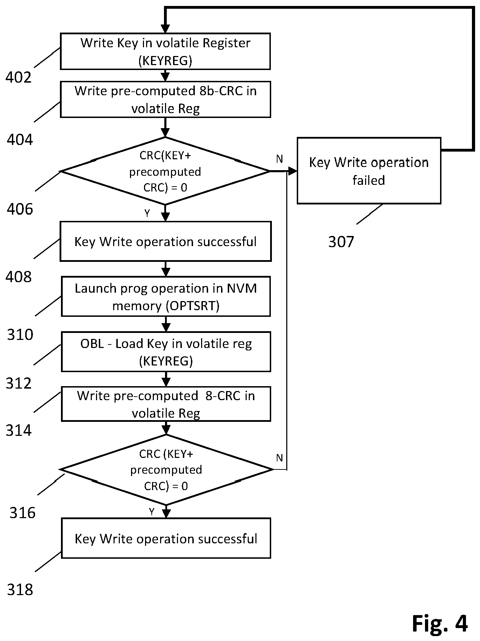

La figure 4 représente, sous forme de blocs, des étapes d'un autre mode de mise en oeuvre d'un procédé de vérification d'écriture d'une clé dans une mémoire non-volatile.

Par rapport à la figure 3, la figure 4 illustre des étapes de vérification de l'écriture de la clé depuis l'extérieur du circuit vers le registre dédié 212 de l'interface 106.

Dans une étape 402 (Write Key in volatile Register (KEYREG)), la clé est écrite, depuis l'extérieur du circuit, dans le registre 212.

Dans une étape 404 (Write pre-computed 8b-CRC in volatile Reg), un résultat précalculé du CRC de la clé écrite à l'étape 402 est stocké dans un des registres 206 de l'interface 106. Le CRC précalculé est codé, par exemple, sur 8 bits ou sur 16 bits. Ce résultat précalculé est, par exemple chargé, en même temps que la clé depuis l'extérieur du circuit (à vérifier).

Dans une étape 406 (CRC (KEY+ precomputed CRC) = 0), un deuxième CRC est calculé sur un message formé par la clé à laquelle est adossé le code précalculé. Le deuxième code est calculé par la même machine d'états que le code précalculé. Ainsi, s'il présente une valeur nulle (0, ou 0x0 pour un octet), cela signifie que la clé écrite dans le registre 212 ne comporte pas d'erreur. Dans ce cas (branche Y de sortie du bloc 406), la clé est considérée comme valide (bloc 408 - Key Write operation successful). Dans le cas contraire (branche N du bloc 406), l'écriture de la clé est considérée comme invalide (bloc 307 - Key Write operation failed).

Après l'étape 408, le procédé est similaire à celui de l'exemple de la figure 3 à partir de l'étape 310.

Le procédé d'écriture de la figure 4 permet, de par le code de redondance cyclique effectué sur un message formé par la clé de sécurité à laquelle est adossé le code précalculé, de contrôler que l'écriture de la clé de sécurité dans le deuxième registre 212 est valide avant que celle-ci soit écrite vers la zone 218 de la mémoire non-volatile 104 tout en maintenant un niveau de sécurité identique au niveau de sécurité de la clé de sécurité elle-même.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la mémoire non-volatile 104 est par exemple une mémoire FLASH mais la personne du métier pourrait envisager d'autres types de mémoires non-volatiles comme des mémoires à changement de phase.

Enfin, la mise en oeuvre pratique des modes de réalisation et variantes décrits est à la portée de la personne du métier à partir des indications fonctionnelles données ci-dessus. En particulier, même si les exemples sont décrits pour une clé de sécurité de 128 bits et des codes de redondances cycliques de 8 bits, la personne du métier pourra mettre en oeuvre des clés de sécurité codées sur un nombre de bits supérieur ou inférieur du moment que la validité de l'écriture de la clé lors des étapes 316 ou 406 est équivalente à l'obtention de la valeur nulle du code de redondance cyclique effectué sur un message formé par la clé de sécurité copiée à laquelle est adossé le code précalculé.

## Revendications

1. Procédé de vérification d'une écriture d'une clé dans une mémoire non-volatile (104) comprenant les étapes suivantes:
- stocker dans un registre (206) d'une interface (106) de ladite mémoire, un premier code de redondance cyclique de ladite clé, précalculé ;
- écrire la clé de sécurité dans une zone (218) de la mémoire non-volatile (104);
- copier la clé de sécurité écrite dans ladite zone (218) vers un deuxième registre (212) de ladite interface (106);
- calculer un deuxième code de redondance cyclique sur un message formé par la clé de sécurité copiée à laquelle est adossé le premier code de redondance cyclique ;
si le deuxième code de redondance cyclique est équivalent à la valeur nulle, considérer l'écriture de la clé de sécurité dans ladite mémoire non volatile (104) comme valide.

2. Circuit électronique, comprenant une mémoire non-volatile (104), et configuré pour :
- stocker dans un registre (206) d'une interface (106) de ladite mémoire, un premier code de redondance cyclique de ladite clé, précalculé ;
- écrire la clé de sécurité dans une zone (218) de la mémoire non-volatile (104);
- copier la clé de sécurité écrite dans ladite zone (218) vers un deuxième registre (212) de ladite interface (106);
- calculer un deuxième code de redondance cyclique sur un message formé par la clé de sécurité copiée à laquelle est adossé le premier code de redondance cyclique ;
si le deuxième code de redondance cyclique est équivalent à la valeur nulle, considérer l'écriture de la clé de sécurité dans ladite mémoire non volatile (104) comme valide.

3. Procédé selon la revendication 1 ou circuit selon la revendication 2, dans lequel si le deuxième code de redondance cyclique n'est pas équivalent à la valeur nulle, alors une des étapes n'est pas valide.

4. Procédé d'écriture d'une clé dans une mémoire non volatile d'un circuit selon la revendication 2 ou 3 comprenant au moins une interface de communication avec l'extérieur du circuit, le procédé comprenant les étapes de:
- transférer depuis l'extérieur du circuit :
une clé dans le deuxième registre (212) de l'interface de la mémoire non-volatile ; et
un premier code de redondance cyclique précalculé dans le premier registre de ladite interface ;
- calculer un résultat d'un troisième code de redondance cyclique sur un message formé par la clé à laquelle est adossé le premier code de redondance cyclique précalculé ; si le troisième code de redondance cyclique est équivalent à zéro, alors l'écriture de la clé de sécurité, dans le deuxième registre (212) est considérée valide et est suivie des étapes du procédé selon la revendication 1 ou 3.

5. Circuit selon la revendication 2 ou 3, comprenant en outre au moins une interface de communication avec l'extérieur du circuit, le circuit étant configuré pour :
- transférer depuis l'extérieur du circuit une clé dans un deuxième registre (212) de l'interface de la mémoire non-volatile, et un premier code de redondance cyclique précalculé dans un premier registre de ladite interface ;
- calculer un résultat d'un troisième code de redondance cyclique sur un message formé par la clé à laquelle est adossé le premier code de redondance cyclique précalculé ;
si le troisième code de redondance cyclique est équivalent à zéro, alors l'écriture de la clé de sécurité, dans le deuxième registre (212) est considérée valide et est suivie des étapes de stockage, d'écriture, de copie et de calcul de la revendication 2 ou 3.

6. Procédé selon la revendication 4 ou circuit selon la revendication 5, dans lequel si le troisième code de redondance cyclique n'est pas équivalent à la valeur nulle, alors une desdites étapes n'est pas valide.

7. Procédé selon l'une quelconque des revendications 1 ou 3, ou 4 ou 6, ou circuit selon l'une quelconque des revendications 2 ou 3, ou 5 ou 6, dans lequel le deuxième et/ou le troisième code de redondance cyclique équivalent à la valeur nulle est 0x00.

8. Procédé selon l'une quelconque des revendications 1 ou 3 ou 4, ou 6 ou 7, ou circuit selon l'une quelconque des revendications 2 ou 3, ou 5 à 7, dans lequel la clé est codée sur 128 bits.

9. Procédé selon l'une quelconque des revendications 1 ou 3 ou 4, ou 6 à 8, ou circuit selon l'une quelconque des revendications 2 ou 3, ou 5 à 8 dans lequel les codes de redondance cyclique sont codés sur 8 ou 16 bits.

10. Procédé selon l'une quelconque des revendications 1 ou 3 ou 4, ou 6 à 9, ou circuit selon l'une quelconque des revendications 2 ou 3, ou 5 à 9, dans lequel le deuxième registre (212) est configuré pour être non lisible hormis pour un transfert de l'interface à la mémoire et inversement.

11. Procédé selon l'une quelconque des revendications 1 ou 3 ou 4, ou 6 à 10, ou circuit selon l'une quelconque des revendications 2 ou 3, ou 5 à 10, dans lequel la mémoire non-volatile (104) est une mémoire FLASH.
